# DEMANDE DE BREVET EUROPEEN

(11) **EP 3 038 218 A1**
(43) Date de publication de la demande: **29.06.2016**
(21) Numéro de dépôt: 15201118.5
(22) Date de dépôt: 18.12.2015
(51) Int. Cl.: H01R 13/625, H01R 13/639

(54) **ENSEMBLE DE CONNEXION A VERROUILLAGE PAR BAÏONNETTE DES ELEMENTS DE CONNEXION**

(30) Priorité: 24.12.2014 FR 1463313
(71) Demandeur: RADIALL, 93300 Aubervilliers (FR)
(72) Inventeur: VALENCIA, Laurent, 73240 SAINT GENIX SUR GUIERS (FR)
(74) Mandataire: Nony

(57) **Abrégé**

La présente invention concerne un ensemble de connexion à verrouillage par baïonnette des éléments de connexion.

Selon l'invention, il est prévu une pièce (4) de blocage en translation de l'élément de verrouillage (31) du système à baïonnette dans la position de verrouillage mutuel, la pièce de blocage étant mise en place de manière amovible sur le corps (20) portant l'ergot (22) de baïonnette.

## Description

### Domaine de l'invention

La présente invention concerne le domaine des ensembles de connexion comportant un premier élément de connexion et un deuxième élément de connexion, adaptés pour être verrouillés ensemble par baïonnette.

L'invention s'applique plus particulièrement aux ensembles de connexion de contact optique. L'invention peut par exemple s'appliquer à un ensemble de connexion à un élément de contact optique et à son raccord optique ou à une embase optique.

L'invention peut s'appliquer en particulier, à un ensemble de connexion avec une fiche comportant au moins un contact relié à un câble et un corps ouvert à l'intérieur duquel (est) sont reçu(s) le ou les contacts et avec une embase à platine de fixation sur un panneau d'un équipement client, la fiche et l'embase étant verrouillées entre elles par un système à baïonnette, par exemple comme décrit dans le brevet EP 2239605 B1.

L'invention n'est toutefois pas limitée aux ensembles de connexion optique et s'applique à tous ceux dont le verrouillage mutuel entre éléments de connexion est réalisé par baïonnette.

Ainsi, l'invention peut s'appliquer à un ensemble de connexion électrique, notamment connexion coaxiale comportant un connecteur mâle coaxial et un connecteur femelle coaxial, les connecteurs mâle et femelle comportant chacun un contact central et un contact de masse constitué par un corps métallique de forme générale tubulaire agencé autour du contact central. L'un des éléments peut être un adaptateur.

L'invention peut également s'appliquer à un contact, électrique ou optique, engagé dans une cavité de l'insert d'un connecteur multi-contacts.

L'invention peut s'appliquer à tout ensemble de connexion pour câble comportant une pluralité de conducteurs électriques, notamment pour câble twinaxial ou quadriaxial.

### Etat de l'art

Les ensembles de connexion comportent un premier élément de connexion et un deuxième élément de connexion adapté pour s'engager dans le premier, afin d'assurer la continuité du signal transmis (électrique, hyperfréquence, optique, ...) entre deux câbles.

Il est connu de pouvoir verrouiller les éléments de connexion entre eux, une fois la connexion réalisée, par un système de fixation à baïonnette et ce, afin d'empêcher leur séparation intempestive liée au fonctionnement (vibrations, ....) ou inhérente aux installations dans lesquelles les ensembles de connexion sont implantés.

Les systèmes à baïonnette sont constitués en général d'un ou plusieurs, typiquement deux ou trois, pions ou ergots de verrouillage ménagé(s) à la périphérie du contact de masse de l'un des éléments, et d'un élément de verrouillage femelle, dit bouchon ou douille de verrouillage, monté au moins libre en rotation autour du contact de masse de l'autre des éléments de connexion. Le bouchon de verrouillage est adapté à la préhension manuelle et il comporte une partie pourvue d'une ou plusieurs, typiquement deux ou trois rainure(s) ou rampe(s) de verrouillage.

La forme et l'agencement de chaque rainure de verrouillage sont prévus de sorte que chaque pion de verrouillage puisse y pénétrer par translation du bouchon de verrouillage et qu'ensuite une rotation de ce dernier, autour du contact de masse portant le(s) pion(s), assure le verrouillage mécanique mutuel entre les connecteurs mâle et femelle.

Dans certains de ces ensembles de connexion, il peut être prévu en outre un ressort hélicoïdal qui permet de repousser le bouchon de verrouillage dans le sens contraire à celui de l'introduction du (des) pion(s) dans la rainure et ainsi assurer un maintien du verrouillage du bouchon autour du (des) pion(s).

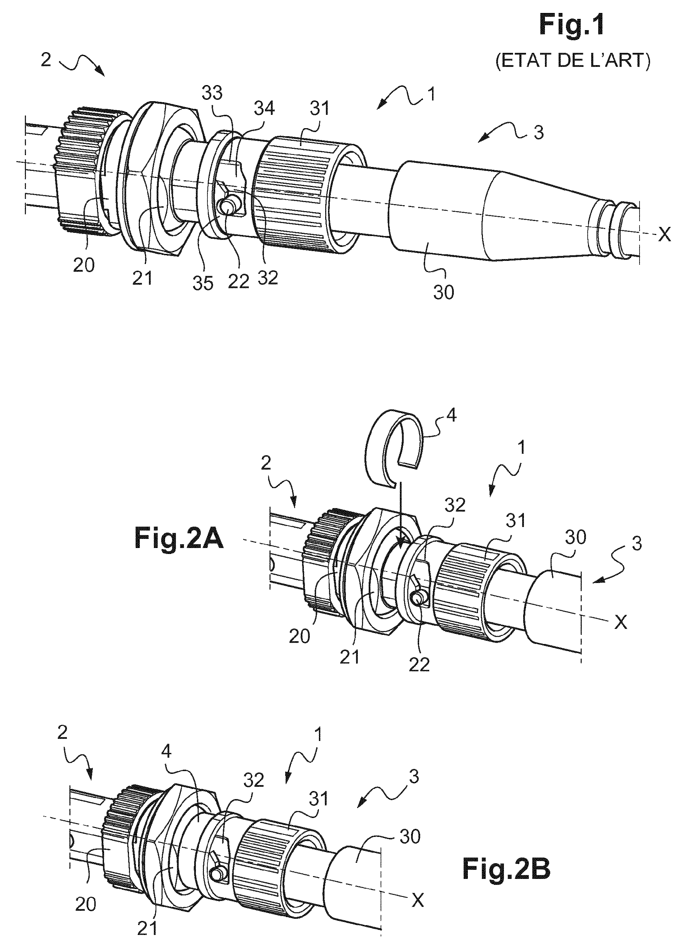

On peut citer ici les ensembles de connexion optiques, commercialisés par la société RADIALL sous la dénomination ST (Standard Tip), qui comportent un système de verrouillage par baïonnette. On a représenté en figure 1, en configuration de connexion verrouillée, un tel ensemble de connexion optique 1 qui comporte un raccord 2 engagé dans un connecteur 3.

Le raccord 2 comporte un corps 20 avec une partie formant un raccord 21 à la périphérie duquel est ménagé un ergot ou pion de verrouillage 22.

Le connecteur 3 comporte un corps 30 autour duquel est monté libre en translation et en rotation un bouchon de verrouillage femelle 31 dans lequel est réalisée une rainure 32 ouverte vers l'extérieur. La rainure ouverte 32 comporte une première portion rectiligne 33 débouchant sur l'extérieur du bouchon, une portion inclinée 34 dans le prolongement de la première portion rectiligne 33 et enfin une deuxième portion rectiligne 35 dans le prolongement de la portion inclinée 33. Les portions 33 et 35 sont ici rectilignes selon l'axe de translation du bouchon 31 et la portion inclinée 34 s'étend transversalement aux portions 33 et 35.

Le verrouillage par baïonnette entre le raccord 2 et le connecteur 3 est réalisé, une fois leur connexion mutuelle, de la manière suivante.

Un opérateur fait coulisser le bouchon 31 sur le raccord 21 en alignant la rainure 32 sur l'ergot 22. Une fois l'ergot 22 en butée en fond de première portion rectiligne 33, l'opérateur applique une rotation au bouchon 31, ce qui provoque le passage de l'ergot 22 dans la portion inclinée 34 et son logement dans la deuxième portion rectiligne 35. Le verrouillage proprement dit est ainsi assuré par le logement ou autrement dit l'emprisonnement de l'ergot 22 dans la portion 35 de la rainure 32.

Du fait que le bouchon de verrouillage doit pouvoir être manipulé manuellement, la force qui est appliquée pour effectuer le verrouillage effectif par translation puis rotation du bouchon est relativement faible. Ainsi, dans certaines circonstances liées au fonctionnement ou aux installations, il s'est avéré que, lorsque soumis à de fortes vibrations, certains ensembles de connexion coaxiaux à verrouillage par baïonnette comme décrits ci-dessus, pouvaient être déverrouillés uniquement par la force résultante des fortes vibrations.

La demande de brevet EP0660452 divulgue un ensemble de connexion avec fixation d'un connecteur mâle sur un panneau par baïonnette au moyen de deux pièces amovibles dont l'une ouverte porte un ergot de verrouillage qui vient se loger dans une rainure ménagée sur une partie en saillie du panneau et l'autre vient fermer la pièce ouverte afin d'empêcher l'accès à ce système de verrouillage, cette pièce de fermeture venant par ailleurs s'accrocher sur le panneau. Cette solution présente l'inconvénient d'avoir un nombre de pièces important que l'on peut perdre facilement.

Le brevet EP 1154169B 1 a proposé dans un ensemble de connexion coaxial, de réaliser un bouchon avec une patte définissant une rainure de verrouillage, qui soit élastique, et d'insérer une pièce supplémentaire de blocage amovible dans une partie de la rainure logeant un ergot de verrouillage, l'insertion étant rendue possible par déformation élastique de la patte. Cette solution présente tout d'abord l'inconvénient important d'avoir une pièce supplémentaire de blocage dont la forme est compliquée à réaliser et qui n'est pas robuste. Ensuite, les précisions dimensionnelles qu'il est nécessaire d'obtenir sur la patte et la pièce de blocage, sont élevées.

Quelle que soit l'efficacité des systèmes de verrouillage par baïonnettes connus, il subsiste un risque de démontage accidentel de ceux-ci lors des manipulations par un opérateur manuellement ou à l'aide d'un outil, plus particulièrement lorsqu'il travaille dans un environnement dense ou à l'aveugle. Cela est encore plus critique lorsque les installations nécessitent des torsions de câbles comme c'est le cas dans les connecteurs multi-contacts avec des fibres solidaires de la pièce à ergots.

Les moyens de blocage en rotation du système à baïonnette divulgués dans demande de brevet EP0660452 et le brevet EP1154169B1 n'empêchent également pas le démontage intempestif. Ils présentent en outre l'inconvénient majeur de venir augmenter de manière importante l'encombrement radial de l'ensemble de connexion puisqu'ils viennent se rapporter sur l'extérieur et dépasse du diamètre dimensionnant de l'un ou l'autre des éléments de connexion mâle et femelle. Or, un encombrement radial important des moyens de blocage peut être contraignant, voire rédhibitoire dans certaines applications, notamment où l'on recherche à réaliser une étanchéité par le biais d'un manchon qui est destiné à venir coiffer, c'est-à-dire recouvrir le bouchon de verrouillage au plus près afin de laisser le minimum d'espace afin de garantir l'étanchéité recherchée.

Il existe donc un besoin pour améliorer les ensembles de connexion à verrouillage par baïonnette, notamment afin d'éviter tout risque de déverrouillage accidentel de la part d'un opérateur, manuellement ou à l'aide d'un outil, et ce sans augmenter son encombrement radial.

Le but de l'invention est de répondre au moins en partie à ce besoin.

### Exposé de l'invention

Pour ce faire, l'invention concerne un ensemble de connexion comportant un ensemble de connexion comportant :
- un premier élément de connexion,
- un deuxième élément de connexion,
- un système de verrouillage mutuel des premier et deuxième éléments de connexion, le système comportant au moins un ergot de verrouillage ménagé à la périphérie du corps de l'un des premier et deuxième éléments de connexion, et un élément de verrouillage solidaire de l'autre des premier et deuxième éléments de connexion, comportant au moins une rainure de verrouillage dont la forme et l'agencement sont prévus de sorte que l'ergot puisse y pénétrer par translation relativement à l'ergot de l'élément de verrouillage et qu'ensuite une rotation de ce dernier, autour du corps portant l'ergot, assure le verrouillage mutuel.

En outre, la translation de l'ergot de l'élément de verrouillage dans la rainure de verrouillage est réalisée selon un sens de connexion des premier et deuxième éléments de connexion et la rotation de l'élément de verrouillage autour du corps portant l'ergot, est suivie d'une deuxième translation de l'ergot dans la rainure de verrouillage selon un sens de déconnexion des premier et deuxième éléments de connexion qui amène l'élément de verrouillage dans la position de verrouillage mutuel.

Selon l'invention, l'ensemble de connexion comporte en outre une pièce de blocage en translation de l'élément de verrouillage dans la position de verrouillage mutuel, la pièce étant mise en place de manière amovible sur le corps portant l'ergot.

Ainsi, selon un aspect de l'invention, la pièce de blocage est adaptée pour bloquer en translation l'élément de verrouillage selon un sens de connexion des premier et deuxième éléments de connexion.

Le blocage en translation de l'élément de verrouillage selon un sens de déconnexion est quant à lui assuré par la butée de l'ergot de l'élément de verrouillage contre une portion de butée de la rainure de verrouillage.

Selon un mode de réalisation avantageux, lorsqu'elle est dans sa position de blocage, la pièce ne fait pas saillie au-delà du diamètre dimensionnant du système de verrouillage.

Selon ce mode, la pièce de blocage ne fait pas saillie au-delà du plus grand diamètre extérieur Ø de l'élément de verrouillage.

Grâce à la pièce de blocage en translation de l'élément de verrouillage, l'invention permet d'éviter tout risque de déverrouillage et donc de déconnexion accidentels, de la part d'un opérateur, notamment lorsqu'il réalise une intervention dans un environnement dense ou à l'aveugle.

La solution de blocage selon l'invention est simple à mettre en oeuvre et peu coûteuse.

Contrairement aux solutions de blocage connues, comme celles divulguées dans la demande de brevet EP0660452 et le brevet EP1154169B1, l'invention permet d'obtenir une pièce de blocage robuste, aisée à réaliser et à installer et qui en outre présente avantageusement un encombrement radial restreint.

L'encombrement radial restreint de la pièce de blocage selon l'invention est particulièrement avantageux lorsqu'on souhaite conférer une fonction d'étanchéité à l'ensemble de connexion et ce sans augmenter les dimensions des éléments d'étanchéité. En effet, du fait que cette pièce ne fait pas saillie du diamètre dimensionnant du système de verrouillage, on peut par exemple utiliser un manchon d'étanchéité de dimensions standard qui vient coiffer l'élément de verrouillage, par exemple un bouchon de verrouillage.

Selon un premier mode de réalisation avantageux, la pièce de blocage est un anneau monté directement ou non sur une portée cylindrique du corps portant l'ergot.

Selon ce premier mode, l'anneau élastique peut avantageusement être monté dans une gorge du corps portant l'ergot.

Selon une variante de montage, l'anneau élastique est monté perpendiculairement à l'axe de la connexion.

Selon une première variante de réalisation, l'anneau élastique est un jonc à section constante. Le jonc à section constante peut comporter en outre une patte logée dans la partie de la rainure de verrouillage dans laquelle l'ergot est inséré lors de la translation de l'élément de verrouillage et qui débouche sur l'extérieur.

Selon une deuxième variante de réalisation, l'anneau élastique est un anneau à section non constante, de préférence un anneau de type à forme en croissant.

Selon un deuxième mode de réalisation avantageux, la pièce de blocage est un écrou dont le filetage intérieur est vissé sur le filetage extérieur du corps portant l'ergot.

L'ensemble de connexion selon l'invention peut être avec l'un des premiers et deuxième éléments de connexion de type femelle, tandis que l'autre est de type mâle, adapté pour être connecté à l'élément de connexion femelle, et l'élément de verrouillage constituant un bouchon monté libre en rotation et en translation autour du corps de l'un des éléments connexion femelle ou mâle.

L'ensemble de connexion peut constituer un ensemble de connexion coaxial, destiné à connecter deux câbles coaxiaux entre eux, les éléments de connexion constituant chacun un connecteur coaxial.

Un des éléments de connexion peut constituer une partie d'un connecteur multi-contacts, tandis que l'autre portant l'ergot de verrouillage constitue un élément de contact optique du connecteur.

L'ensemble de connexion peut constituer un ensemble de connexion de contacts électriques et/ou optiques.

L'invention a également pour objet un procédé de montage de deux éléments de connexion, respectivement mâle et femelle d'un ensemble de connexion comportant en outre un système de verrouillage des éléments de connexion en configuration connectée l'un à l'autre, le système comportant au moins un ergot de verrouillage ménagé à la périphérie du corps de l'un des éléments de connecteurs mâle ou femelle, et un élément de verrouillage, dit bouchon de verrouillage, monté libre en rotation et autour du corps de l'autre des éléments de connexion, et comportant au moins une rainure de verrouillage, le procédé comportant les étapes suivantes :
- connexion des éléments de connexion entre eux,
- verrouillage mutuel des éléments dans leur configuration connectée, par translation du bouchon de sorte que l'ergot puisse pénétrer dans la rainure par translation du bouchon, puis par rotation de ce dernier, autour du corps portant l'ergot,
- mise en place amovible d'une pièce de blocage sur le corps portant l'ergot, de sorte qu'elle bloque en translation le bouchon dans la position de verrouillage mutuel.

L'invention a enfin pour objet un procédé de démontage de deux éléments de connexion, respectivement mâle et femelle d'un ensemble de connexion comportant en outre un système de verrouillage des éléments de connexion en configuration connectée l'un à l'autre, le système comportant au moins un ergot de verrouillage ménagé à la périphérie du corps de l'un des éléments de connecteurs, et un élément de verrouillage, dit bouchon de verrouillage, monté libre en rotation et autour du corps de l'autre des éléments de connexion, et comportant au moins une rainure de verrouillage, le procédé comportant les étapes suivantes :
- enlèvement d'une pièce de blocage amovible sur le corps portant l'ergot, depuis sa position de blocage dans laquelle elle bloque en translation le bouchon dans la position de verrouillage mutuel des éléments,
- déverrouillage mutuel des éléments dans leur configuration connectée, par rotation du bouchon, autour du corps portant l'ergot, puis par translation de sorte que l'ergot puisse s'extraire de la rainure,
- déconnexion des éléments de connexion entre eux.

### Description détaillée

D'autres avantages et caractéristiques de l'invention apparaîtront à la lecture de la description qui suit d'un exemple de réalisation non limitative en se référant au dessin annexé dans lequel :
- la figure 1 est une vue en perspective d'un ensemble de connexion coaxial selon l'état de l'art, dans sa configuration connectée et verrouillée,
- les figures 2A et 2B sont des vues en perspective montrant l'étape de mise en place d'une pièce de blocage selon une première variante de l'invention sur un ensemble selon la figure 1,
- la figure 2C est une vue en coupe de détail de la figure 2B,
- les figures 3A et 3B sont des vues en perspective montrant l'étape de mise en place d'une pièce de blocage selon la première variante de l'invention sur un autre ensemble de connexion,
- les figures 4A à 4F sont des vues en perspective montrant l'ensemble des étapes de montage d'un ensemble de connexion, dont l'étape de mise en place d'une pièce de blocage selon une deuxième variante de l'invention,
- les figures 5 et 5A sont des vues respectivement en coupe longitudinale et de détail d'un ensemble de connexion avec pièce de blocage selon la deuxième variante de l'invention et éléments d'étanchéité,
- les figures 6 et 6A sont des vues respectivement en perspective et en coupe de détail d'un autre ensemble de connexion avec pièce de blocage selon une troisième variante de l'invention et avec éléments d'étanchéité,
- les figures 7A et 7B sont des vues en perspective montrant l'étape de mise en place d'une pièce de blocage selon une quatrième variante de l'invention sur un ensemble de connexion comme celui représenté aux figures 4A à 4F.

Par souci de clarté, les mêmes éléments d'un ensemble de connexion selon l'état de l'art et d'un ensemble de connexion selon l'invention sont désignés par les mêmes références numériques.

La figure 1 a déjà été décrite en préambule. Elle ne le sera donc pas ci-après.

On a représenté en figures 2A à 2C l'étape de mise en place amovible d'un anneau élastique à section constante 4 en tant que pièce de blocage en translation du bouchon de verrouillage 31.

Plus exactement, lorsque l'ergot 22 est logé dans la portion de butée 35 de la rainure 32, le raccord 2 et connecteur 3 sont dans leur position de verrouillage mutuel (figure 2A).

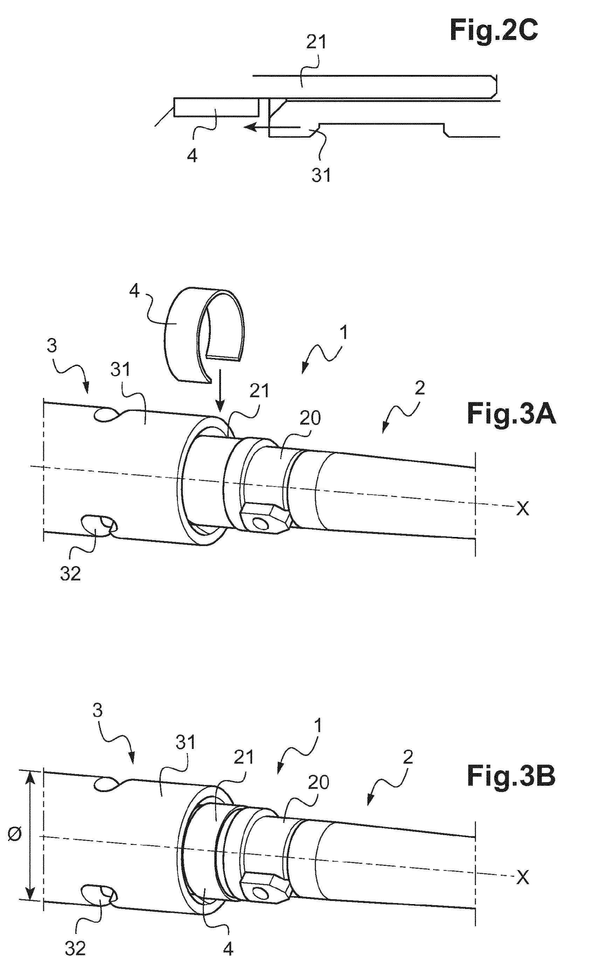

L'anneau élastique 4 est alors monté directement sur la portée 21 du corps 20 du raccord 2 perpendiculairement à l'axe X de la connexion et vient ainsi bloquer le bouchon 31 en translation le long de l'axe X de la connexion (figure 2B). Autrement dit, le bouchon 31 ne peut être déplacé en translation selon la flèche de la figure 2C, ce qui a pour conséquence le maintien du verrouillage mutuel.

L'anneau élastique 4 ne peut être enlevé de manière intempestive par un opérateur, car il doit insérer un outil, typiquement un tournevis, entre l'anneau 4 et sa portée 21 pour l'enlever.

En outre, comme visible en figure 2C, l'encombrement radial de l'anneau élastique à section constante 4 est tel qu'il ne fait pas saillie au-delà du diamètre du bouchon de verrouillage 31. Ainsi, on ne modifie pas l'encombrement initial de l'ensemble de connexion connu selon la figure 1, ce qui permet notamment de recouvrir le bouchon 31 à l'aide d'un manchon d'étanchéité sans qu'il soit nécessaire d'apporte de modification à ce dernier.

On a représenté en figures 3A et 3B un autre ensemble de connexion, dans la configuration connectée et verrouillée duquel un anneau élastique 4 à section constante est également mis en place sur une portée 21 du corps cylindrique 20 pour empêcher la translation de l'élément de verrouillage 31. L'élément de connexion 2 portant l'ergot 22 est dans cet exemple illustré, un élément de contact optique répondant à la norme NF EN 4531, et l'autre élément de connexion 3 constitue l'adaptateur de cavité de l'insert d'un connecteur multi-contacts.

La partie du connecteur multi-contacts 3 comporte un logement 31 dans lequel la rainure de verrouillage 32 est réalisée. Ainsi, dans la position de verrouillage mutuel l'élément de contact 2 est verrouillé dans le logement 31 (figure 3A). La mise en place de l'anneau élastique à section constante 4 sur la portée 21 permet d'empêcher toute translation relative entre l'élément de contact 2 et le logement 31 de la partie de connecteur multi-contacts (figure 3B), ce qui évite ainsi tout déverrouillage intempestif entre eux.

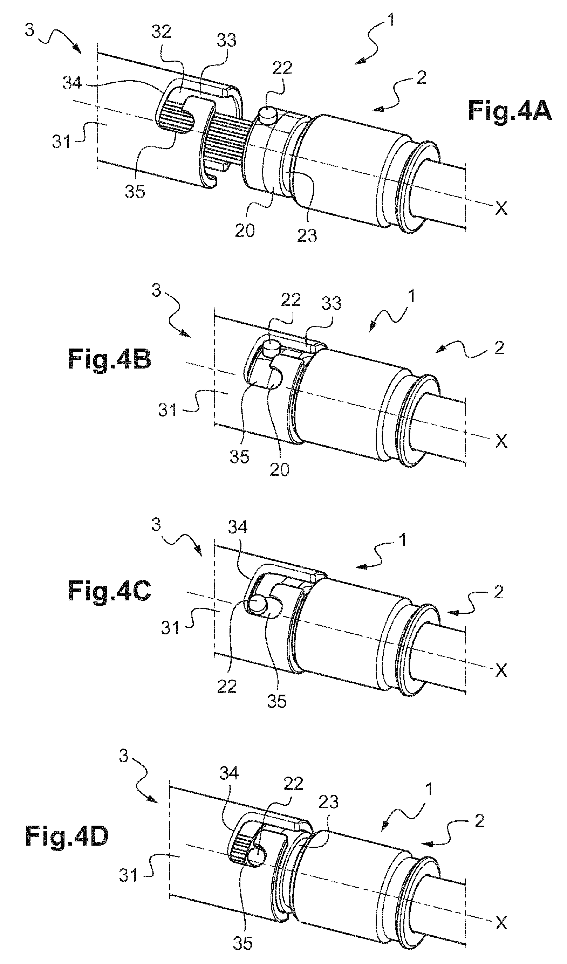

On décrit maintenant en référence aux figures 4A à 4F, l'ensemble des étapes de montage d'un autre ensemble de connexion, dont l'étape de mise en place dans une gorge 23 d'un anneau 4 de type en forme de croissant en tant que variante de l'anneau élastique à section constante 4 montré aux figures 2A à 3B.

Dans cet exemple illustré, l'élément de connexion 2 est un élément de contact quadri-axial et l'élément de connexion 3 est une partie d'un connecteur multi-contact dont une partie de logement 31 du contact 2 constitue l'élément de verrouillage.

On positionne tout d'abord l'élément de contact 2 dans l'axe de la partie de logement 31 en alignant l'ergot 22 sur la portion rectiligne 33 (figure 4A).

Puis, on réalise une translation relative entre l'élément de contact 2 et le logement 31 jusqu'à ce que l'ergot 22 vienne en butée contre le fond de la portion 33 de rainure 32 (figure 4B).

Cette translation est réalisée selon un sens de connexion des éléments de connexion 2, 3.

On effectue alors une rotation relative entre l'élément de contact 2 et le logement 31 jusqu'à ce que l'ergot 22 vienne en butée contre le fond de la portion transversale 34 de rainure 32 (figure 4C).

Une dernière translation relative entre l'élément de contact 2 et le logement 31 mais dans le sens inverse à celui initial jusqu'à ce que l'ergot 22 vienne en butée contre le fond de la portion rectiligne 35 de rainure 32 (figure 4D).

Cette deuxième translation est réalisée selon un sens de déconnexion des éléments de connexion 2, 3.

Dans cette position de la figure 4D, l'élément de contact 2 et la partie 3 de connecteur multi-contact sont verrouillés mutuellement.

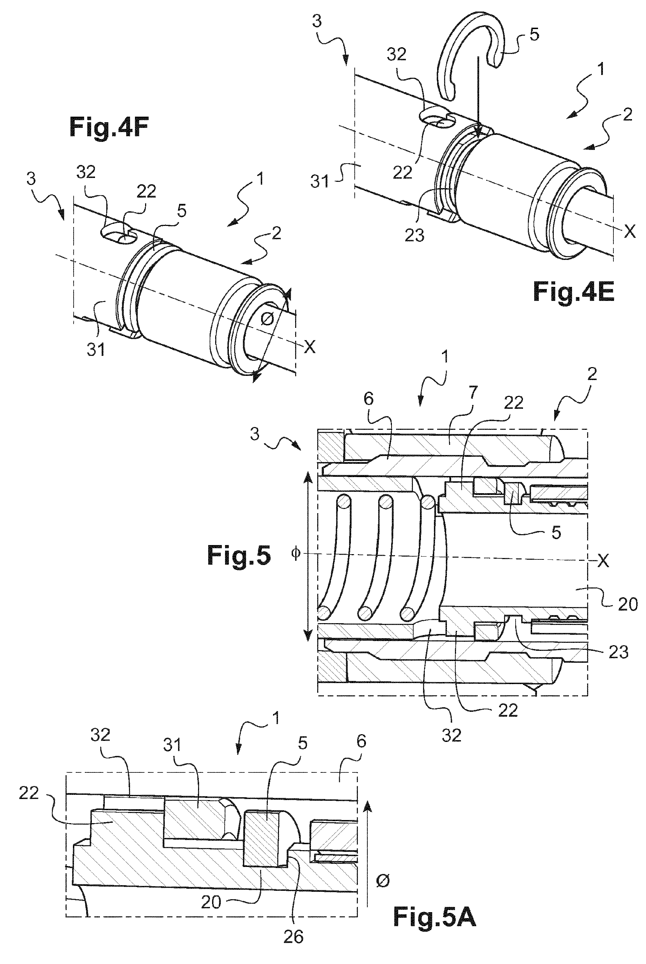

On vient alors mettre en place un anneau de forme croissant 5 au fond d'une gorge 23 réalisée sur le corps 20 de l'élément de contact 2 portant l'ergot 22 (figure 4E).

Ainsi, l'anneau 5 mis en place permet d'empêcher toute translation relative entre l'élément de contact 2 et le logement 31 de la partie de connecteur multi-contacts (figure 4F), ce qui évite ainsi tout déverrouillage intempestif entre eux.

En outre, comme on peut le voir sur cette figure 4F, l'anneau 5 ne fait pas saillie du diamètre dimensionnant Ø du logement 31.

En figures 5 et 5A, on a illustré l'avantage à avoir l'anneau de blocage 5 qui ne fait pas saillie au-delà du plus grand diamètre extérieur de l'élément de verrouillage 31 portant la rainure 32.

Cet encombrement radial restreint de l'anneau de blocage permet de mettre en place un manchon d'étanchéité 6 directement autour de l'élément de verrouillage 31. On obtient ainsi une bonne étanchéité de l'ensemble de connexion sans modification des pièces d'étanchéité 6, 7. Autrement dit, la mise en place de la pièce 5 de blocage en translation de l'élément de verrouillage 31 n'implique pas de modification des pièces 6, 7 nécessaires à la réalisation de l'ensemble de connexion 1.

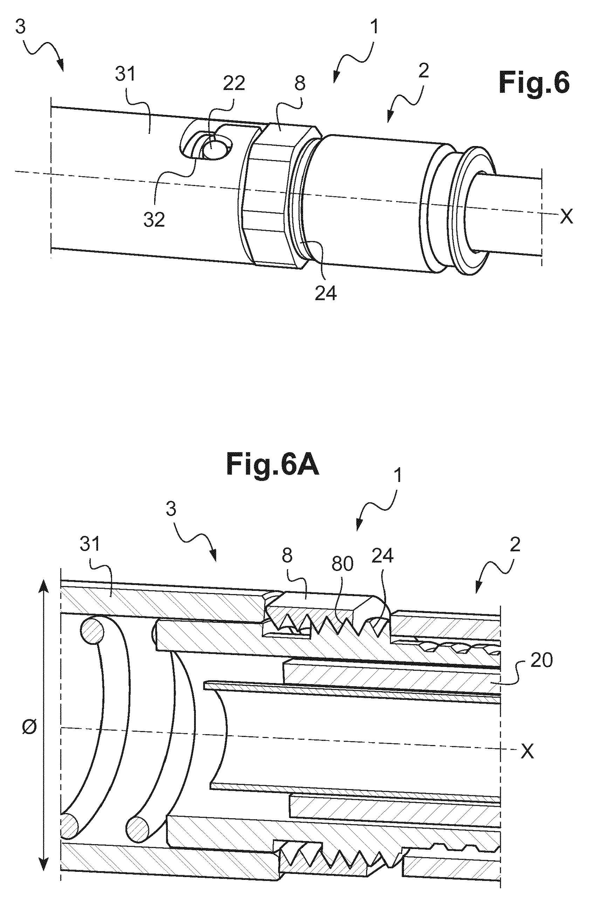

On a représenté en figures 6 et 6A, une variante de pièce de blocage en translation de l'élément de verrouillage 31. Il s'agit ici d'un écrou 8 dont le filet intérieur 80 est vissé sur celui extérieur 24 du corps 20 portant l'ergot de verrouillage, une fois le verrouillage mutuel réalisé. L'écrou 8 peut donc translater longitudinalement, ce qui le rend amovible.

Comme visible sur la figure 6A, l'écrou 8 est vissé jusqu'à venir en butée longitudinale selon l'axe de l'ensemble de connexion 1, contre l'élément de verrouillage 31.

Comme visible également sur cette figure 6A, le diamètre extérieur de l'écrou 8 est choisi pour ne pas faire saillie au-delà du diamètre extérieur de l'élément de verrouillage 31.

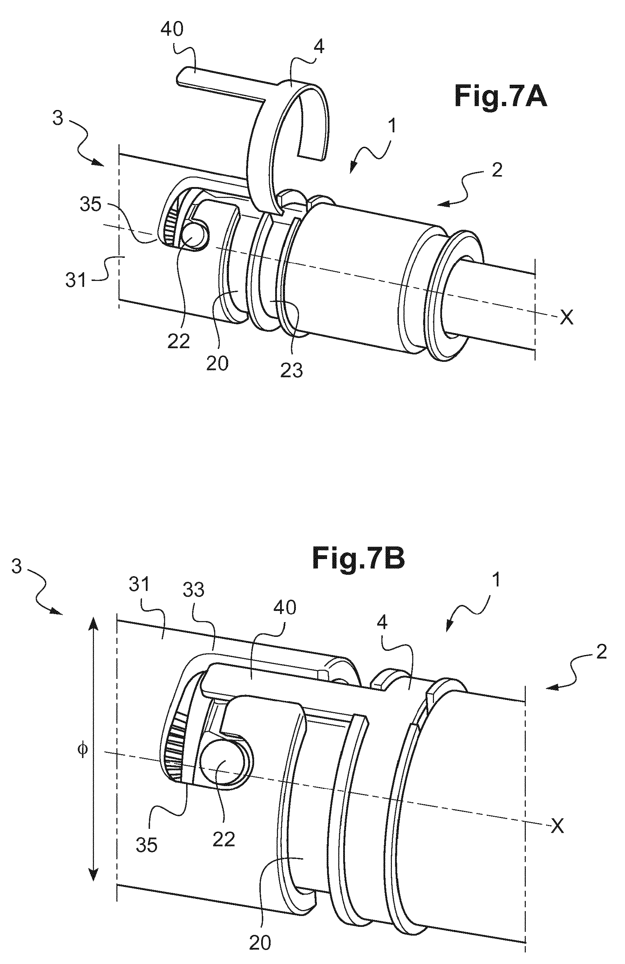

On a représenté en figures 7A et 7B, la mise en place d'une autre variante d'anneau 4 de blocage en translation de l'élément de verrouillage 31.

L'anneau 4 à section constante comporte ici une patte 40 qui prolonge la section constante. Lors de la mise en place de l'anneau 4 dans la gorge 23 par sa section constante, cette patte 40 vient se loger à l'intérieur de la partie rectiligne 33 de la rainure 32 par laquelle l'ergot de verrouillage 22 est introduit (figure 7B).

Ainsi, en cas de tentative de déplacement en translation ou en rotation relativement à l'élément de contact 2 de l'élément de verrouillage 31, la patte 40 bloque ce dernier.

L'invention n'est pas limitée aux exemples qui viennent d'être décrits.

L'invention permet d'offrir une solution de blocage en translation supplémentaire au verrouillage par baïonnette des ensemble de connexion connus, ce qui évite tout risque de déverrouillage accidentel et donc tout risque de démontage voire de déconnexion entre les éléments de connexion.

## Revendications

1. Ensemble de connexion (1) comportant :
- un premier élément de connexion (2),
- un deuxième élément de connexion (3),
- un système de verrouillage mutuel des premier et deuxième éléments de connexion, le système comportant au moins un ergot de verrouillage (22) ménagé à la périphérie du corps (20) de l'un des premier et deuxième éléments de connexion, et un élément de verrouillage (31) solidaire de l'autre des premier et deuxième éléments de connexion, comportant au moins une rainure de verrouillage (32) dont la forme et l'agencement sont prévus de sorte que l'ergot (22) puisse y pénétrer par translation relativement à l'ergot de l'élément de verrouillage et qu'ensuite une rotation de ce dernier, autour du corps portant l'ergot, assure le verrouillage mutuel,
**caractérisé par le fait qu'**il comporte en outre une pièce (4, 5, 8) de blocage en translation de l'élément de verrouillage (31) dans la position de verrouillage mutuel, la pièce de blocage étant mise en place de manière amovible sur le corps (20) portant l'ergot (22).

2. Ensemble de connexion (1) selon la revendication 1, **caractérisé par le fait que** la pièce (4, 5, 8) de blocage est adaptée pour bloquer en translation l'élément de verrouillage (31) dans un sens de connexion des premier et deuxième éléments de connexion.

3. Ensemble de connexion (1) selon l'une des revendications 1 ou 2, **caractérisé par le fait que** lorsqu'elle est dans sa position de blocage, la pièce (4, 5, 8) ne fait pas saillie au-delà du diamètre dimensionnant du système de verrouillage.

4. Ensemble de connexion (1) selon la revendication 3, **caractérisé par le fait que** lorsqu'elle est dans sa position de blocage, la pièce de blocage (4, 5, 8) ne fait pas saillie au-delà du plus grand diamètre extérieur Ø de l'élément de verrouillage (31).

5. Ensemble de connexion (1) selon l'une des revendications 1 à 4, **caractérisé par le fait que** la pièce de blocage est un anneau élastique (4, 5) monté directement ou non sur une portée cylindrique du corps (20) portant l'ergot (22).

6. Ensemble de connexion (1) selon la revendication 5, **caractérisé par le fait que** l'anneau élastique (4, 5) est monté dans une gorge (23) du corps (20) portant l'ergot (22).

7. Ensemble de connexion (1) selon la revendication 5 ou 6, **caractérisé par le fait que** l'anneau élastique (4, 5) est monté perpendiculairement à l'axe (X) de la connexion.

8. Ensemble de connexion (1) selon l'une des revendications 5 à 7, **caractérisé par le fait que** l'anneau élastique est un jonc (4) à section constante.

9. Ensemble de connexion (1) selon la revendication 8, **caractérisé par le fait que** le jonc (4) à section constante comporte en outre une patte (40) logée dans la partie (33) de la rainure (32) de verrouillage dans laquelle l'ergot (22) est inséré lors de la translation de l'élément de verrouillage (31) et qui débouche sur l'extérieur.

10. Ensemble de connexion (1) selon l'une des revendications 5 à 7, **caractérisé par le fait que** l'anneau élastique est un anneau (5) à section non constante, de préférence un anneau de type à forme en croissant.

11. Ensemble de connexion (1) selon l'une des revendications 1 à 4, **caractérisé par le fait que** la pièce de blocage est un écrou (8) dont le filetage intérieur (80) est vissé sur le filetage extérieur (24) du corps (20) portant l'ergot (22).

12. Ensemble de connexion (1) selon l'une des revendications précédentes, **caractérisé par le fait que** l'un des premiers et deuxième éléments de connexion est de type femelle, tandis que l'autre est de type mâle, adapté pour être connecté à l'élément de connexion femelle, et **par le fait que** l'élément de verrouillage constitue un bouchon (31) monté libre en rotation et en translation autour du corps (30) de l'un des éléments connexion femelle ou mâle.

13. Ensemble de connexion (1) selon la revendication 12, **caractérisé par le fait qu'**il constitue un ensemble de connexion coaxial (1), destiné à connecter deux câbles coaxiaux entre eux, les éléments de connexion constituant chacun un connecteur coaxial.

14. Ensemble de connexion (1) selon la revendication 12, **caractérisé par le fait que** l'un des premiers et deuxième éléments de connexion constitue une partie d'un connecteur multi-contacts, tandis que l'autre portant l'ergot de verrouillage constitue un élément de contact optique du connecteur.

15. Ensemble de connexion (1) selon l'une des revendications précédentes, **caractérisé par le fait qu'**il constitue un ensemble de connexion de contacts électriques et/ou optiques.

16. Procédé de montage de deux éléments de connexion, respectivement mâle et femelle d'un ensemble de connexion comportant en outre un système de verrouillage des éléments de connexion en configuration connectée l'un à l'autre, le système comportant au moins un ergot de verrouillage (22) ménagé à la périphérie du corps (20) de l'un des éléments de connecteurs mâle ou femelle, et un élément de verrouillage, dit bouchon de verrouillage (31), monté libre en rotation et autour du corps (30) de l'autre des éléments de connexion, et comportant au moins une rainure de verrouillage (32), le procédé comportant les étapes suivantes :
- connexion des éléments de connexion entre eux,
- verrouillage mutuel des éléments dans leur configuration connectée, par translation du bouchon (31) de sorte que l'ergot (22) puisse pénétrer dans la rainure (32) par translation du bouchon, puis par rotation de ce dernier, autour du corps portant l'ergot,
- mise en place amovible d'une pièce de blocage (4, 5, 8) sur le corps (20) portant l'ergot (22), de sorte qu'elle bloque en translation le bouchon (31) dans la position de verrouillage mutuel.

17. Procédé de démontage de deux éléments de connexion, respectivement mâle et femelle d'un ensemble de connexion comportant en outre un système de verrouillage des éléments de connexion en configuration connectée l'un à l'autre, le système comportant au moins un ergot de verrouillage (22) ménagé à la périphérie du corps (20) de l'un des éléments de connecteurs, et un élément de verrouillage, dit bouchon de verrouillage (31), monté libre en rotation et autour du corps (30) de l'autre des éléments de connexion, et comportant au moins une rainure de verrouillage (32), le procédé comportant les étapes suivantes :
- enlèvement d'une pièce de blocage (4, 5, 8) amovible sur le corps (20) portant l'ergot (22), depuis sa position de blocage dans laquelle elle bloque en translation le bouchon (31) dans la position de verrouillage mutuel des éléments,
- déverrouillage mutuel des éléments dans leur configuration connectée, par rotation du bouchon (31), autour du corps portant l'ergot (22), puis par translation de sorte que l'ergot (22) puisse s'extraire de la rainure (32),
- déconnexion des éléments de connexion entre eux.
